# EUROPÄISCHE PATENTSCHRIFT

(11) **EP 1 914 282 B1**
(45) Veröffentlichungstag und Bekanntmachung des Hinweises auf die Patenterteilung: **23.09.2009**
(21) Anmeldenummer: 07019442.8
(22) Anmeldetag: 04.10.2007
(51) Int. Cl.: C09D 133/06, C09D 175/06, C09D 175/04

(54) **Wässriges Beschichtungsmittel auf Basis eines Bindemittelgemisches als Basislack**
Aqueous coating of a binder mixture as base coat
Revêtement aqueux à base d'un mélange de liants comme vernis de base

(30) Priorität: 17.10.2006 DE 102006048926
(43) Veröffentlichungstag der Anmeldung: 23.04.2008
(73) Patentinhaber: Bayer MaterialScience AG, 51368 Leverkusen (DE)
(72) Erfinder: Blum, Harald, Dr., 51375 Leverkusen (DE); Müller, Heino, 51375 Leverkusen (DE); Schmidt, Heinz, 50374 Erftstadt (DE)

(56) Entgegenhaltungen:
- DE-A1- 4 328 092
- DE-A1- 10 009 412

## Beschreibung

Die Erfindung betrifft ein wässriges Beschichtungsmittel auf Basis einer Kombination aus wässrigen Bindemitteln und Vernetzer, ein Verfahren zu dessen Herstellung und Verwendung für ein- oder mehrschichtige Lackierungen, insbesondere Beschichtungen mit Steinschlagschutzeigenschaften.

In der Automobillackierung wird häufig ein Lackaufbau bestehend aus Grundierung, Füller, Basislackschicht ("Base Coat") und Klarlack eingesetzt. Jede der verschiedenen Schichten im Lackaufbau hat dabei mehrere spezielle Funktionen zu übernehmen.

Die Herstellung solcher Mehrschichtüberzüge ("Multi Layer Coatings") bzw. einzelner Schichten in solchen Multi Layer Coatings ist zahlreich im Stand der Technik beschrieben.

Die Füllerschicht hat u.a. die Funktion Unebenheiten in der Karosserie auszugleichen, für eine gute Haftung auf der Grundierung zu sorgen und gleichzeitig durch elastische Eigenschaften der Beschichtung einen Schutz vor tief greifenden Beschädigungen, wie z.B. durch Steinschlag, zu gewährleisten. Dabei wird der Füller in zwei Schichten appliziert, wobei eine Schicht Unebenheiten der Karosserie ausgleichen, die zweite Schicht die Steinschlagschutzeigenschaften erzeugen soll. Es sind jedoch bereits wässrige Füllersysteme im Stand der Technik beschrieben, die mit einer einzigen Füllerschicht beide Anforderungen erfüllen.

Die Basislackschicht, insbesondere der "Metallic Base Coat", dient zur Erzeugung guter filmoptischer Eigenschaften, hoher Glanzwerte und ausgeprägter Metalliceffekte des Beschichtungsaufbaus und sorgt damit für ein ansprechendes Erscheinungsbild des lackierten Gegenstandes.

In der DE-A 195 42 626 und auch in, DE-A 196 18 446 werden wässrige Beschichtungszusammensetzungen beschrieben, die als Komponente (I) eine Bindemittelmischung aus in organischem Lösemittel gelöstes Acrylatcopolymerisat (A1) und/oder Polyesterharz (A2) und/oder Polyurethanharz (A3) enthält sowie als Komponente (II) ein nicht-blockiertes Polyisocyanat als Vernetzer und als Komponente (III) eine wässrige Dispersion der Komponenten (A1) und/oder (A2) und/oder (A3) und/oder (A4) enthält. Die dort beschriebenen Systeme können als Decklacke, Füller oder auch Autoreparaturlacke verwendet werden.

In der DE-A 43 28 092 wurden emulgatorfreie, wässrige Überzugsmittel offenbart, die sich als Beschichtung auf Basislackschichten eignen.

DE-A 100 09 412 beschreibt wässrige Überzugsmittel für festkörperreiche Einbrennlackierungen.

In der WO-A 98/12001 werden mehrschichtige Beschichtungen mit verbesserten Steinschlagschutzeigenschaften beschrieben, bestehend aus einem wässrigen "Base Coat" und einem speziellen "Pulver Clear Coat" auf Basis eines zur Migration in den "Base Coat" fähigen Polyacrylatharzes. Nachteilig an diesem System ist, dass die Bestandteile des "Base Coats" mit den speziellen Polyacrylaten sehr gut verträglich sein müssen. Die dort beschriebenen Eigenschaften werden nur erreicht durch die Kombination eines wässrigen Basislackes mit einem speziellen "Pulver Clear Coat" und durch ein spezielles Aushärteverfahren, mit Vortrocknung des "Base Coats" bei 90°C und anschließendem gemeinsamen Einbrennen von "Base Coat" und "Pulver Clear Coat".

Nach wie vor besteht ein Bedarf an geeigneten Beschichtungssystemen, um den Lackierprozess effizienter zu gestalten und das Eigenschaftsniveau der mehrschichtigen Lackierungen zu verbessern.

Aufgabe der vorliegenden Erfindung bestand somit in der Bereitstellung einer Bindemittelkombination, die sowohl die Eigenschaften eines Steinschlagschutzfüllers, als auch die Eigenschaften eines Basislacks in sich vereint und somit die Qualität eines 4-Schichten Lackaufbaues aus Grundierung, Füller, Basislack und Klarlack verbessert oder sogar einen Verzicht auf eine der Lackschichten im 4-Schichten Lackaufbau ermöglicht. Die wesentlichen Anforderungen, die dabei zu erfüllen sind, sind neben einer sicheren Verarbeitbarkeit auch eine sehr gute Haftung des Basislacks, gute Elastizität und Steinschlagschutzeigenschaften sowie ausreichendes Ausgleichen von Oberflächenunebenheiten. Darüber hinaus sollte eine gute Überlackierbarkeit und Reparaturfähigkeit, sehr gute filmoptische Eigenschaften wie z.B. Verlauf, Metallic-Effekt und DOI-Werte (distinction of image oder Abbildeschärfe), optimale Pigmentbenetzung sowie hohe Beständigkeitseigenschaften gegenüber Wasser, Lösemitteln und Umwelt-, Licht- und Witterungseinflüssen erreicht werden. Ebenfalls wünschenswert ist, dass die Bindemittelkombination ausreichend lagerstabil ist.

Überraschenderweise wurde nun gefunden, dass wässrige Beschichtungsmittel, die eine Kombination aus mindestens zwei, bevorzugt drei, im chemischen Aufbau verschiedene wässrige Dispersionen, von denen mindestens eine, bevorzugt zwei zur Vernetzung befähigte Gruppen aufweisen und einen Vernetzer enthalten, sehr gute Steinschlagschutzeigenschaften aufweisen.

Gegenstand der vorliegenden Erfindung sind wässrige Beschichtungsmittel, enthaltend weiterhin eine wässrige Bindemittelmischung A) enthaltend
A1) 25 bis 70 Gew.-% einer sekundären, hydroxyfunktionellen Polyacrylatdispersion oder Polyacrylatemulsion,
A2) 5 bis 50 Gew.-% einer aliphatischen Polyurethandispersion,
A3) 20 bis 70 Gew.-% einer hydroxyfunktionellen Polyesterpolyurethandispersion aufgebaut zu mindestens 75 Gew.% aus einem Polyester des Molekulargewichts 500 bis 2500 g/mol,
   sowie mindestens einen Vernetzer B),
   wobei mindestens eine Komponente A1) und/oder A3) in einer Menge von mindestens 35 Gew.% enthalten sein muss.

Die erfindungsgemäßen Beschichtungsmittel weisen einen Anteil an organischen Lösemitteln von 2 bis 12 Gew. % auf.

Geeignete sekundäre, hydroxyfunktionelle Polyacrylat-Dispersionen A1) werden erhalten durch Copolymerisation ungesättigter Verbindungen (Monomeren) in Lösemitteln, Neutralisation eingebauter potentiell ionischer Gruppen und Dispergieren in Wasser.

Zur Herstellung von sekundären Polyacrylat-Dispersionen A1) geeignete Monomere sind z.B. carboxyfunktionelle radikalisch polymerisierbaren Monomere wie z.B. Acrylsäure, Methacrylsäure, β-Carboxyethylacrylat, Crotonsäure, Fumarsäure, Maleinsäure(anhydrid), Itaconsäure oder Monoalkylester zweibasiger Säuren bzw. Anhydride wie z.B. Maleinsäuremonoalkylester. Bevorzugt werden Acrylsäure oder Methacrylsäure eingesetzt.

Geeignete nichtfunktionelle Monomere sind Cyclohexyl(meth)acrylat, mit Alkylgruppen am Ring substituierte Cyclohexyl(meth)acrylate, 4-tert.-Butycyclohexyl(meth)acrylat, Norbornyl(meth)acrylat, Isoborny(meth)acrylat, (Meth)acrylsäureester mit C₁-C₁₈-Kohlenwasserstoffresten im Alkoholteil, beispielsweise Ethylacrylat, Ethylmethacrylat, n-Butylacrylat, n-Butylmethacrylat, iso-Butylacrylat, iso-Butylmethacrylat, 2-Ethylhexylacrylat, Methylmethacrylat, 2-Ethylhexylmethacrylat, tert.-Butylacrylat, Stearylacrylat, Stearylmethacrylat, Norbomylacrylat und/oder Norbornylmethacrylat.

Geeignete hydroxyfunktionelle Monomere sind z.B. OH-funktionelle (Meth)acrylsäureester mit C₁-C₁₈-Kohlenwasserstoffresten im Alkoholteil, wie beispielsweise Hydroxyethylmethacrylat, Hydroxypropylmethacrylat, Hydroxyethylacrylat, Hydroxypropylacrylat, Hydroxybutylacrylat oder Hydroxybutylmethacrylat.

Ebenfalls geeignet sind Alkylenoxideinheiten enthaltende Hydroxymonomere, wie z.B. Additionsprodukte von Ethylenoxid, Propylenoxid oder Butylenoxid an (Meth)acrylsäure. Bevorzugt ist Hydroxyethylmethacrylat und/oder Hydroxypropylmethacrylat.

Ebenfalls geeignet sind Styrol, Vinyltoluol, α-Methylstyrol, Vinylester, Alkylenoxideinheiten enthaltende Vinylmonomere, wie z.B. Kondensationsprodukte von (Meth)acrylsäure mit Oligoalkylenoxidmonoalkylethem sowie gegebenenfalls Monomere mit weiteren funktionellen Gruppen, wie z.B. Epoxygruppen, Alkoxysilylgruppen, Harnstoffgruppen, Urethangruppen, Amidgruppen oder Nitrilgruppen. Auch di- oder höherfunktionelle (Meth)acrylatmonomere und/oder Vinylmonomere, wie z.B. Hexandioldi(meth)acrylat können in Mengen von 0 bis 3 Gew.-%, bezogen auf die Summe der Monomeren, eingesetzt werden.

Optional können auch weitere Monomere eingesetzt werden. In Frage kommen z.B. ungesättigte radikalisch polymerisierbare Verbindungen mit Phosphat- bzw. Phosphonatgruppen oder Sulfonsäure- bzw. Sulfonatgruppen.

Bevorzugte Monomere sind Methylmethacrylat, Styrol, Acrylsäure, Methacrylsäure, Butylacrylat, Butylmethacrylat, Ethylacrylat, tert.-Butylacrylat, 2-Ethylhexylacrylat, 2-Ethylhexyl-methacrylat, Hydroxyethylmethacrylat, Hydroxypropylmethacrylat, Hydroxyethylacrylat, Hydroxypropylacrylat, Hydroxybutylacrylat oder Hydroxybutylmethacrylat.

In den sekundären Polyacrylat-Dispersionen A) beträgt die Menge an carboxyfunktionellen Monomeren zwischen 0,8 und 5 Gew.-%, bevorzugt 1,2 bis 4 Gew.-%, die Menge an hydroxyfunktionellen Monomeren zwischen 1 und 45 Gew.-%, bevorzugt 6 bis 30 Gew.-%.

Geeignete Polymerisationsinitiatoren sind Peroxyverbindungen wie Diacylperoxide, Alkylperester, Dialkylperoxide, Peroxidicarbonate, anorganische Peroxide oder auch Azoverbindungen.

Prinzipiell sind alle organischen Lösemittel zur Herstellung der Polyacrylate geeignet. Die Lösemittel können in beliebigen Mengen, bevorzugt in Mengen von < 20 Gew.-%, bezogen auf die Gesamtsumme der Monomere eingesetzt werden, um niedrige Lösemittelgehalte in der Dispersion zu erhalten. Bevorzugt ist eine Lösemittelmischung aus einem hydrophoben Lösemittel, wie z.B. Solvent Naphta, Toluol, Xylol, Kristallöl und einem hydrophilen Lösemittel, wie z.B. Butylglykol, Butyldiglykol, Diethylenglykol, Propylenglykolmonomethylether oder Dipropylenglykolmonomethylether.

Die Herstellung der sekundären Polyacrylat-Dispersionen kann grundsätzlich nach jedem im Stand der Technik bekannten Verfahren erfolgen, beispielsweise Zulaufverfahren, Batchverfahren oder auch in Kaskadenverfahren.

Bevorzugte sekundäre, hydroxyfunktionelle Polyacrylat-Dispersionen A1) sind erhältlich durch Umsetzung einer Mischung aus
a) 30 bis 85 Gew.-% (Meth)acrylsäurestern mit C₁- bis C₁₈- aliphatischen Kohlenwasserstoffresten im Alkoholteil und/oder Vinylaromaten,
b) 5 bis 35 Gew.-% hydroxyfunktionellen (Meth)acrylsäurestern,
   welche zu einem hydrophoben Polymerisat umgesetzt werden, wobei im Anschluss an die Zugabe von a) und b) eine Mischung aus
c) 4 bis 20 Gew.-% (Meth)acrylsäurestern mit C₁- bis C₁₈- aliphatischen Kohlenwasserstoffresten im Alkoholteil und/oder Vinylaromaten,
d) 4 bis 15 Gew.% hydroxyfunktionellen (Meth)acrylsäurestern und
e) 1 bis 5 Gew. % säurefunktionellen Monomeren, wie Acrylsäure oder Methacrylsäure
   zudosiert und zu einem hydrophilen Polymerisat polymerisiert wird, wobei parallel zur Zugabe von a), b), c), d), und e) Initiatoren in Mengen von 0,5 bis 6,5 Gew.-% zudosiert werden und die Summe der Prozentangaben von a), b), c), d) und e) 100 Gew.% beträgt.

Bevorzugt wird als Lösemittel eine Mischung aus einem hydrophilen Lösemittel, z.B. Butylglykol und einem hydrophoben Lösemittel, z.B. Solvent Naphta eingesetzt.

Nach Abschluss der Polymerisationsreaktion wird die Polymerisatlösung in Wasser oder durch Zugabe von Wasser dispergiert. Die Neutralisation der Säuregruppen mit Amin(en) und/oder Basen und damit Überflührung in Salzgruppen kann vor dem Dispergieren oder parallel durch Zugabe des Neutralisationsamines zusammen mit dem Dispergierwasser oder durch Zugabe parallel zum Dispergierwasser erfolgen. Der Neutralisationsgrad kann zwischen 50 und 150 %, bevorzugt zwischen 60 bis 120 % liegen.

Nach dem Dispergieren kann das verwendete Lösemittel anteilig oder ganz destillativ entfernt werden.

Bevorzugte Neutralisationsamine sind Dimethylethanolamin, Ethyldiisopropylamin, Methydiethanolamin und 2-Aminomethyl-2-methyl-propanol.

Der pH-Wert der sekundären Polyacrylat-Dispersionen liegt zwischen 5 und 11, bevorzugt zwischen 6 und 10. Die Feststoffgehalte liegen zwischen 20 und 60 Gew. %, bevorzugt zwischen 35 und 55 Gew. %. Die mittleren Teilchengrößen der Dispersion liegen zwischen 20 und 400 nm.

Bei der Herstellung der sekundären Polyacrylat-Dispersionen können anstelle der Lösemittel oder zusammen mit den Lösemitteln auch so genannte Reaktivverdünner eingesetzt werden. Geeignete Reaktivverdünner sind z.B. bei Raumtemperatur flüssige di- und/oder trifunktionelle Polyether, niedrigviskose Polyester wie Umsetzungsprodukte von 1 Mol einer Dicarbonsäure wie z.B. Dimerfettsäuren oder Adipinsäure mit 2 Mol eines Diols oder Triols oder 2 Mol Cardura^{®} E 10 (Gycidylester der Versaticsäure, Hexion Specialities USA)). Ebenfalls als Reaktivverdünner geeignet sind Umsetzungsprodukte von Caprolacton mit niedermolekularen Alkoholen. Geeignet sind auch Rizinusöl und andere hydroxyfunktionelle Öle.

Geeignete hydroxyfunktionelle Polyacrylat-Emulsionen A1) sind solche, die nach bekannten Copolymerisations-Verfahren in wässriger Emulsion in Gegenwart geeigneter oberflächenaktiver Substanzen hergestellt werden. Polyacrylat-Emulsionen und ihre Herstellung werden z.B. beschrieben in R.O. Athey jr., Emulsion Polymer Technology, Dekker, New York, 1991.

Die bei der Herstellung der sekundären Polyacrylat-Dispersionen genannten Monomeren sind grundsätzlich auch zur Herstellung von Polyacrylat-Emulsionen geeignet.

Initiatoren werden dabei entweder vorgelegt und/oder parallel, gegebenenfalls auch mit Zeitvorlauf oder Zeitverzögerung und/oder Zeitnachlauf zugegeben. Geeignete Initiatoren sind z.B. Redoxsysteme, Peroxide, Persulfate und/oder Azoverbindungen wie Dibenzoylperoxid, Dicumolperoxid, Cumolhydroperoxid, Kaliumperoxodisulfat, Ammoniumperoxodisulfat, Azobisisobutyronitril oder Di-tert-Butylperoxid. Als Redoxinitiatoren können z.B. Eisen-II-Ionen zugesetzt werden.

Bevorzugte Polyacrylat-Emulsionen A) werden erhalten durch Emulsionspolymerisation in Wasser in Gegenwart von Initiatoren und oberflächenaktiven Substanzen von
a) 10 bis 40 Gew.- % hydroxyfunktionellen (Meth)acrylsäurestern,
b) 40 bis 90 Gew.-% (Meth)acrylsäurestern mit aliphatischen C₁- bis C₁₈-Kohlenwasserstoffresten im Alkoholteil und/oder Vinylaromaten,
c) 0 bis 5 Gew.-% säurefunktionellen Monomeren, wie Acrylsäure oder Methacrylsäure,
d) 0 bis 25 Gew.-% sonstigen Monomeren wie z.B. Acrylnitril, Vinylacetat, Vinylpyrollidon.

Als Komponente A1) sind auch Mischformen von Polyacrylat-Dispersionen, wie z.B. Polyester-Polyacrylat-Dispersionen geeignet. Diese enthalten sowohl Polyacrylat- als auch Polyestersegmente und werden z.B. hergestellt indem in Gegenwart von Polyestern eine radikalische (Co)-Polymerisation von Monomeren, die den bei der Herstellung von sekundären Polyacrylat-Dispersionen genannten entsprechen, durchgeführt wird.

Diese Umsetzung wird in Substanz oder bevorzugt in organischer Lösung durchgeführt. In dem Polyesteracrylat sind dabei 10 bis 75 Gew.-%, bevorzugt 20 bis 60 Gew.-% Polyesteranteile enthalten.

Bevorzugt hydroxyfunktionelle Polyester-Polyacylat-Dispersionen werden erhalten durch eine radikalisch initiierte Polymerisation einer Mischung aus
a) 20 bis 70 Gew.-% (Meth)acrylsäurestern mit aliphatischen C₁- bis C₁₈-Kohlenwasserstoffresten im Alkoholteil und/oder Vinylaromaten,
b) 3 bis 35 Gew.- % hydroxyfunktionellen (Meth)acrylsäurestern,
c) 2 bis 8 Gew. -% säurefunktionellen Monomeren, wie Acrylsäure oder Methacrylsäure,
   in Gegenwart von
d) 75 bis 10 Gew. % eines hydroxyfunktionellen Polyesters, welcher gegebenenfalls durch Einbau von Doppelbindungen enthaltenden Komponenten zur Pfropfpolymerisation befähigte Gruppen aufweist.

Bevorzugte Initiatoren sind di-tert.-Butylperoxid und tert.-Butylperoktoat. Die Initiatoren werden in Mengen von 0,5 bis 5 Gew.-% eingesetzt. Die Reaktion wird bei 90 bis 180 °C durchgeführt.

Die eingebauten Säuregruppen werden teilweise oder vollständig mit Neutralisationsaminen umgesetzt, bevorzugt sind Dimethylethanolamin, Ethyldiisopropylamin oder 2-Aminomethyl-2-methyl-propanol. Anschließend wird in oder mit Wasser dispergiert.

Geeignete Polyurethan-Dispersionen A2) sind an sich bekannte, in der Regel selbstemulgierende Polyurethane bzw. Polyurethan-/Polyharnstoffe in wässriger Form.

Selbstemulgierend werden die Polyurethane durch Einbau von ionischen und/oder nichtionisch hydrophilierenden Gruppen in die Polymerkette. Der Einbau der hydrophilen Gruppen ist auf vielfältige Art möglich z.B. können hydrophile Gruppen direkt in der Polymerkette eingebaut sein oder sie können seiten- oder endständig angebracht sein.

Geeignete Polyurethan-Dispersionen können nach dem Fachmann bekannten Herstellverfahren in Schmelze oder in organischer Lösung hergestellt und anschließend dispergiert werden, wobei gegebenenfalls die so genannte Kettenverlängerungsreaktion zum Molekulargewichtsaufbau in organischer Lösung, parallel zum Dispergierschritt oder nach dem Dispergierschritt durchgeführt werden kann.

Üblicherweise werden folgende Rohstoffe zur Herstellung geeigneter Polyurethan-Dispersionen A) eingesetzt bzw. miteinander umgesetzt:
1) Mindestens ein NCO-reaktiver Baustein zum Einbau hydrophiler Gruppen in das Polyurethan, wie Hydroxycarbonsäuren, z.B. Dimethylolessigsäure, 2,2-Dimethylolpropionsäure, 2,2-Dimethylbuttersäure, 2,2-Dimethylolpentansäure, Dihydroxybernsteinsäure, Hydroxypivalinsäure oder Gemische derartiger Säuren, Hydroxysulphonsäuren, Aminocarbonsäuren wie z.B. die Michael-Addukte von Isophorondiamin oder Ethylendiamin an Acrylsäure, Aminosulphonsäuren wie z.B. Aminoethylethansulphonsäure, hydroxy- oder aminofunktionelle Phosphonsäuren und/oder mono-, di- oder trifunktionelle Polyethylenoxidbausteine des Molekulargewichtsbereiches 350 bis 2500 g/mol, wobei auch Mischungen verschiedener Hydrophilierungsmittel eingesetzt werden können. Komponente 1) wird in solchen Mengen eingesetzt, dass stabile wässrige Dispersionen erhalten werden.
   Besonders geeignete NCO-reaktive Bausteine zum Einbau hydrophiler Gruppen sind Dimethylolpropionsäure, Dimethylolbuttersäure, mono- oder dihydroxyfunktionelle Polyethylenoxidbausteine des Molekulargewichtsbereiches 350 bis 2500, wie z.B. Polyether LB 25^{®} (Monohydroxyfunktioneller Polyether auf Ethylenoxidbasis, Bayer MaterialScience AG, DE), Carbowax ^{®}750 (Monohydroxyfunktioneller Polyether auf Ethylenoxidbasis, Dow Chemicals, USA), Pluriol^{®} A 500 (Monohydroxyfunktioneller Polyether auf Ethylenoxidbasis, BASF AG, Ludwigshafen, Deutschland) und hydroxy- oder aminofunktionale Sulphonsäuren bzw. - sulphonate.
2) Mindestens ein aliphatisches und/oder aromatisches Di- oder Polyisocyanat z.B. di- oder trifunktionelle aliphatische Isocyanate wie Hexamethylendiisocyanat, Butandiisocyanat, Isophorondiisocyanat, 1-Methyl-2,4 (2,6)-diisocyanatocyclohexan, Norbomandiisocyanat, Xylylendiisocyanat, Tetramethylxylylendiisocyanat, Hexahydroxylylendiisocyanat, Nonantriisocyanat, 4,4'- Diisocyanatodicyclohexylmethan. Ebenfalls geeignet ist die Mitverwendung aromatischer Isocyanate wie z.B. 2,4(2,6)-Diisocyanatotoluol oder 4,4'-Diisocyanatodiphenylmethan sowie höhermolekulare bzw. oligomere Polyisocyanate des Molekulargewichtsbereiches 336 bis 1500 auf Basis der oben genannten aliphatischen Isocyanate. Bevorzugt werden 4,4'-Diisocyanatodicyclohexylmethan und/oder Isophorondiisocyanat und/oder Hexamethylendiisocyanat und/oder 1-Methyl-2,4(2,6)-diisocyanatocyclohexan eingesetzt. Besonders bevorzugt ist die Verwendung von Isophorondiisocyanat und/oder Hexamethylendiisocyanat oder von Mischungen aus 4,4'-Diisocyanatodicyclohexylmethan mit Isophorondiisocyanat oder Hexamethylendiisocyanat.
3) Mindestens eine Polyolkomponente des Molekulargewichtsbereiches 500 bis 18 000 g/mol auf Polyester-, Polyesteramid-, Polyacetal-, Polyether- und/oder Polysiloxan- und/oder Polycarbonatbasis mit einer Funktionalität von 1 bis 5, bevorzugt von 2 bis 2,5.
   Geeignete Polyolkomponenten 3) zur Herstellung der Polyurethan-Dispersionen A) können sein:
   Polyesterpolyole mit einer mittleren Funktionalität von 1,5 bis 5. Insbesondere kommen lineare Polyesterdiole oder auch schwach verzweigte Polyesterpolyole in Betracht, wie sie in bekannter Weise aus aliphatischen, cycloaliphatischen oder aromatischen Di- bzw. Polycarbonsäuren bzw. ihren Anhydriden wie z.B. Bernsteinsäure, Glutarsäure, Maleinsäure, Fumarsäure, Adipinsäure, Pimelinsäure, Korksäure, Azelainsäure, Sebacinsäure, Nonandicarbonsäure, Decandicarbonsäure, Dimerfettsäure, Terephthalsäure, Isophthalsäure, o-Phthalsäure, Tetrahydrophthalsäure, Hexahydrophthalsäure oder Trimellitsäure oder deren Gemisch bzw. Mischungen der genannten mit andern Di- bzw. Polycarbonsäuren mit mehrwertigen Alkoholen wie z.B. Ethandiol, Di-, Tri-, Tetraethylenglykol, 1,2-Propandiol, Di-, Tri-, Tetrapropylenglykol, 1,3-Propandiol, Butandiol-1,4, Butandiol-1,3, Butandiol-2,3, Pentandiol-1,5, Hexandiol-1,6, 2,2-Dimethyl-1,3-propandiol, 1,4-Dihydroxycyclohexan, 1,4-Dimethylolcyclohexan, Octandiol-1,8, Decandiol-1,10, Dodecandiol-1,12 oder deren Gemische, gegebenenfalls unter Mitverwendung höherfunktioneller Polyole wie Trimethylolpropan oder Glycerin hergestellt werden können. Als mehrwertige Alkohole zur Herstellung der Polyesterpolyole kommen natürlich auch cycloaliphatische und/oder aromatische Di- und Polyhydroxylverbindungen in Frage. Anstelle der freien Polycarbonsäure können auch die entsprechenden Polycarbonsäureanhydride oder entsprechende Polycarbonsäureester von niedrigen Alkoholen oder deren Gemische zur Herstellung der Polyester verwendet werden.
   Es können auch anteilig monofunktionelle Carbonsäuren mitverwendet werden, wie z.B. Benzoesäure, Ethylhexansäure, Sojaölfettsäure, Erdnußölfettsäure, Ölsäure, gesättigte C₁₂-C₂₀-Fettsäuren bzw. deren Gemische sowie Cyclohexanol, Isooctanol und Fettalkohole.
   Selbstverständlich kann es sich bei den Polyesterpolyolen auch um Homo- oder Mischpolymerisate von Lactonen handeln, die vorzugsweise durch Anlagerung von Lactonen bzw. Lactongemischen wie Butyrolacton, ε-Caprolacton und/oder Methyl-ε-caprolacton an geeignete di- und /oder höherfunktionelle Startermoleküle, wie z.B. die vorstehend als Aufbaukomponenten für Polyesterpolyole genannten niedermolekularen, mehrwertigen Alkohole, erhalten werden. Die entsprechenden Polymerisate des ε-Caprolactons sind besonders bevorzugt.
   Auch Hydroxylgruppen aufweisenden Polycarbonate kommen als Polyhydroxylkomponenten in Betracht, z.B. solche, die durch Umsetzung von Diolen wie 1,4-Butandiol und/oder 1,6-Hexandiol und/oder Pentandiol mit Diarylcarbonaten, z.B. Diphenylcarbonat oder Phosgen hergestellt werden können.
   Als Polyetherpolyole seien z.B. die Polyadditionsprodukte der Styroloxide, des Ethylenoxid, Propylenoxid, Tetrahydrofuran, Butylenoxid, Epichlorhydrins, sowie ihre Mischadditions- und Pfropfprodukte, sowie die durch Kondensation von mehrwertigen Alkoholen oder Mischungen derselben und die durch Alkoxylierung von mehrwertigen Alkoholen, Aminen und Aminoalkoholen gewonnenen Polyetherpolyole genannt.
   Es können auch Blockcopolymere auf Basis der genannten Polyole, wie z.B. Polyether-Polyester oder Polycarbonat-Polyester oder Polycarbonat-Polyether eingesetzt werden.
   Bevorzugt werden Polyesterpolyole und/oder Polycarbonatpolyole und/oder C3- bzw. C4-Polyetherpolyole eingesetzt. Besonders bevorzugt ist die Verwendung einer Kombination aus Polyesterpolyol und Polycarbonatpolyol oder Polycarbonatpolyol und C4-Polyetherpolyol.
4) Gegebenenfalls niedermolekulare (Molekulargewicht < 500 g/Mol) Diole, Triole oder Tetraole wie z.B. 1,4-Butandiol, 1,6-Hexandiol, Ethylenglykol, Trimethylolpropan, Neopentylglykol, Glycerin, Pentaerythrit oder/und Aminoalkohole wie z.B. Diethanolamin, Ethanolamin, Diisopropanolamin, Propanolamin, gegebenenfalls auch in ethoxylierter und/oder propoxylierter Form.
5) Gegebenenfalls so genannte Kettenverlängerer wie z.B. Di- und/oder Polyamine und/oder Aminoalkohole, wie z.B. Diethanolamin, 1,2-Diaminopropan, 1,4-Diaminobutan, 2,5-Diamino-2,5-dimethylhexan, 1,5-Diamino-2-methylpentan (Dytek^{®} A, Fa DuPont), 1,6-Diaminohexan, 2,2,4- und/oder 2,4,4-Trimethyl-1,6-diaminohexan, 1,11-Diaminoundecan, 1,12-Diamino-dodecan oder Triaminononan, Ethylendiamin, Isophorondiamin, Diethylentriamin, Hydrazin, Adipinsäuredihydrazid, Hydroxyethylethylendiamin, Bishydroxyethylethylendiamin, Aminopropanol, Aminoalkoxysilane bzw. deren Mischungen. Es kann auch eine Kettenverlängerung durch anteilige oder vollständige Umsetzung der NCO-Gruppen des aus 1), 2) ,3) und 4) erhaltenen Prepolymeren mit Wasser durchgeführt werden.

Bevorzugte Polyurethan-Dispersionen A2) enthalten als Aufbaukomponenten
1) 0,5 bis 10 Gew. -% mindestens eines NCO-reaktiven Bausteines mit mindestens einer hydrophilen Gruppe,
2) 8 bis 60 Gew. -% aliphatische bzw. cycloaliphatische Di- oder Polyisocyanate,
3) 20 bis 90 Gew.-% mindestens einer Polyolkomponente des Molekulargewichtsbereiches von 500 bis 18 000 g/Mol mit einer mittleren Funktionalität von 2 bis 3,
4) 0 bis 8 Gew. -% niedermolekulare Diole und/oder Triole und
5) 0 bis 6 Gew.-% Diamine und/oder Hydrazin bzw. Hydrazide und/oder Aminoalkohole und/oder Wasser als Kettenverlängerer.

Besonders bevorzugte Polyurethan-Dispersionen A2) enthalten als Aufbaukomponenten
1) 1,4 bis 6,5 Gew.-% mindestens eines NCO-reaktiven Bausteines mit mindestens einer Carboxyl- bzw. Carboxylat- und/oder Sulphonatgruppe, gegebenenfalls in Kombination mit einem Polyethylenoxidbaustein des Molekulargewichtsbereiches 350 bis 2500 g/mol,
2) 15 bis 50 Gew. -% aliphatische und/oder cycloaliphatische Diisocyanate,
3) 40 bis 83 Gew.-% mindestens einer Polyolkomponente des Molekulargewichtsbereiches 800 bis 2400 g/Mol auf Basis eines Polyesters und/oder Polycarbonates und/oder C3-bzw. C4-Ethers,
4) 0 bis 4 Gew. -% niedermolekulare Diole und/oder Triole wie Hexandiol, Butandiol, Ethylenglykol, Glycerin, Trimethylolpropan und deren Umsetzungsprodukte mit 1 bis 6 Mol Ethylen- und/oder Propylenoxid und
5) 0 bis 4 Gew.-% Diamine und/oder Hydrazin bzw. Hydrazide und/oder Aminoalkohole und/oder Wasser als Kettenverlängerer,
wobei Neutralisationsmittel für die Carboxyl- und/oder Sulphonsäuregruppen in Mengen von 50 bis 150 Equivalenten enthalten sind.

Üblicherweise werden bei der Herstellung der Polyurethan-Dispersionen in der Schmelze oder in organischer Lösung die Bausteine 1), 2), 3) und gegebenenfalls 4) zu einem isocyanatfunktionellen Prepolymeren umgesetzt, wobei dieses in einem oder gegebenenfalls auch in mehreren, aufeinander folgenden Reaktionsschritten durchgeführt werden kann, wobei das isocyanatfunktionelle Prepolymere dann entweder in Schmelze, in organischer Lösung oder in wässriger Dispersion mit Kettenverlängerer 5) zu einem hochmolekularen, in Wasser dispergierten bzw. dispergierbaren Polyurethan umgesetzt wird. Gegebenenfalls wird anschließend das eingesetzte Lösemittel anteilig oder ganz destillativ entfernt. Geeignete Neutralisationsamine sind z.B. die bei der Herstellung der sekundären Polyacrylat-Dispersionen genannten Amine, wobei isocyanatreaktive Neutralisationsmittel erst nach der Kettenverlängerungsreaktion und dem Abreagieren der Isocyanatgruppen zugesetzt werden sollten. Geeignete Lösemittel sind z.B. Aceton oder Methylethylketon, welche üblicherweise abdestilliert werden, N-Methylpyrrolidon oder N-Ethylpyrrolidon.

Die Reaktionen können auch unter Einsatz von in der Polyurethanchemie gebräuchlichen Katalysatoren, wie z.B. Dibutylzinndilaurat, Dibutylzinnoxid, Zinndioktoat, Zinnchlorid, tertiäre Amine durchgeführt werden, um die Reaktionen zu beschleunigen bzw. spezielle Effekte zu erzielen.

Die in der erfindungsgemäßen Bindemittelkombination enthaltenen Polyurethan-Dispersionen A2) weisen üblicherweise Feststoffgehalte von 25 bis 60 Gew.-%, pH-Werte von 5,5 bis 11 und mittlere Teilchengrößen von 20 bis 500 nm auf.

Geeignete hydroxyfunktionelle Polyester-Polyurethan-Dispersionen A3) sind Umsetzungsprodukte aus
1) 2 bis 7 Gew.-%, bevorzugt 2 bis 5 Gew.-% Dimethylolpropionsäure und/oder Hydroxypivalinsäure gegebenenfalls in Kombination mit mono-, difunktionellen Polyethylenoxidbausteinen wie, bevorzugt monohydroxyfunktionelle Polyether auf Ethylenoxidbasis oder Methoxypolyethylenglykole,
2) 7 bis 30 Gew.-%, bevorzugt 8 bis 22 Gew.-% einer Mischung enthaltend 1,6-Hexamethylendiisocyanat und/oder Bis-(4-isocyanatocyclohexan)-methan und/oder 1-Methyl-2,4 (2,6)-diisocyanatocyclohexan und/oder 1-Isocyanato-3,3,5-trimethyl-5-isocyanatomethyl-cyclohexan,
3) 60 bis 91 Gew.-%, bevorzugt 70 bis 88 Gew.-% Polyolkomponenten des Molekulargewichtsbereiches 500 bis 8 000 g/mol auf Polyester-, Polyesteramid-, Polyacetal-, Polyether-, Polysiloxan- und/oder Polycarbonatbasis mit einer Funktionalität von 1,8 bis 5, bevorzugt von 2 bis 4, wobei 50 Gew.-%, bevorzugt 75 Gew.-%, besonders bevorzugt 100 Gew.-% der Polyolkomponente aus mindestens einem Polyester besteht und
4) 0 bis 5 Gew.-% niedermolekulare (Molekulargewicht < 500 g/Mol) Diole, Triole, Tetraole und/oder Aminoalkohole.

Die Umsetzung der Komponenten erfolgt in organischer Lösung oder in der Schmelze, gegebenenfalls unter Einsatz von in der Polyurethanchemie gebräuchlichen Katalysatoren oder/und in Gegenwart nicht reaktiver, als Neutralisationsmittel wirksamer Amine, wie z.B. Triethylamin, Ethyldiisopropylamin, N-Methylmorpholin, zu hydroxyfunktionellen, Polyester-Polyurethanen, welche nach der Umsetzung der Komponenten 1), 2), 3) und 4) keine freien Isocyanatgruppen mehr aufweisen.

Anschließend wird in oder mit Wasser dispergiert und gegebenenfalls überschüssiges Lösemittel wieder abdestilliert.

Geeignete Neutralisationsmittel, die vor oder während des Dispergierschrittes zugegeben werden können, sind z.B. Diethanolamin, Dimethylethanolamin, Methyldiethanolamin, Ammoniak oder solche, die bei der Herstellung der sekundären Polyacrylat-Dispersionen genannt wurden.

Polyester-Polyurethan-Dispersion A3) weisen Feststoffgehalte von 25 bis 55 Gew.-%, pH-Werten von 6 bis 11 und mittlere Teilchengrößen von 10 bis 350 nm auf.

Die Komponente B) umfasst Vernetzerharze wie beispielsweise Amid- und Amin-Formaldehydharze, Phenolharze, Aldehyd- und Ketonharze, z.B. Phenol-Formaldehydharze, Resole, Furanharze, Harnstoffharze, Carbamidsäureesterharze, Triazinharze, Melaminharze, Benzoguanaminharze, Cyanamidharze, Anilinharze, wasserverdünnbare bzw. wasserdispergierbare Melamin- bzw. Harnstoff-Formaldehyd-Kondensationsprodukte.

Ebenfalls gut geeignete Vernetzerharze B) sind blockierte Polyisocyanate, beispielsweise auf Basis von Hexamethylendiisocyanat, Bis-(4-isocyanatocyclohexan)-methan, 1,3-Diisocyanatobenzol, Tetramethylendiisocyanat, Methylpentamethylendiisocyanat, Dodecamethylendiisocyanat, 1,4-Diisocyanato-cyclohexan, 1 -Isocyanato-3,3,5-trimethyl-5-isocyanatomethyl-cyclohexan, 4,4'-Diisocyanato-dicyclohexyl-methan, 4,4'-Diisocyanato-dicyclohexylpropan-(2,2), 1,4-Diisocyanatobenzol, 1-Methyl-2,4 (2,6)-diisocyanatocyclohexan, 2,4-Diisocyanatotoluol, 2,6-Diisocyanato-toluol, 4,4'-Diisocyanato-diphenylmethan, 2,2'- und 2,4'-Diisocyanato-diphenylmethan, p-Xylylendiisocyanat, p-Isopropylidendiisocyanat, 4-Isocyanatomethyl-1,8-octandiisocyanat, p-Xylylendiisocyanat und α,α,α',α'-Tetramethyl-m- oder p-Xylylen-diisocyanat sowie aus diesen bestehende Gemische.

Es ist selbstverständlich auch möglich auf Basis der beispielhaft genannten Polyisocyanate die in der Polyurethanchemie an sich bekannten höherfunktionellen Polyisocyanate mit Uretdiongruppen und/oder Carbodiimidgruppen und/oder Allophanatgruppen und/oder Isocyanuratgruppen und/oder Urethangruppen und/oder Iminooxadiazindiongruppen und/oder Oxadiazintriongruppen und/oder Biuretgruppen als blockierte Vernetzerharze einzusetzen.

Es können auch Mischungen verschiedener Diisocyanate und/oder Polyisocyanate eingesetzt werden.

Geeignet Blockierungsmittel für die Polyisocyanatvernetzer können sein: Monoalkohole wie z.B. Methanol, Ethanol, Butanol, Hexanol, Benzylalkohol, Oxime wie z.B. Acetoxim, Methylethylketoxim, Lactame wie z.B. Caprolactam, Phenole, CH-acide Verbindungen wie z.B. Acetessigester oder Malonsäureester wie z.B. Diethylmalonat, Dimethylpyrazol, Amine wie z.B. tert. Butylbenzylamin, Triazol, Dimethyltriazol, Dicyclohexylamin oder Düsopropylamin.

Bevorzugt werden Aminovernetzerharze eingesetzt, ebenfalls bevorzugt in Kombination mit blockierten Polyisocyanaten.

In einer weiteren Ausführungsform der vorliegenden Erfindung enthalten die erfindungsgemäßen wässrigen Beschichtungsmittel
C) eine oder mehrere Dispersionen ausgewählt aus der Gruppe bestehend aus Polyurethan-Dispersionen C1), Polyacrylat-Emulsionen C2) oder Polyurethan-Polyacrylat-Dispersionen C3), wobei die Komponente C1) gleich A2) und C2) gleich A1) ist.

Bevorzugte Bindemittelkombinationen sind **dadurch gekennzeichnet, dass** als Komponente C) eine bei Temperaturen von 20°C und Luftfeuchtigkeiten bis 75% in weniger als 30 Minuten physikalisch trocknende Dispersion verwendet wird. Besonders bevorzugt sind dabei nichthydroxyfunktionelle Polyurethan-Dispersionen C1), wobei C1) gleich A2) ist. Bevorzugt wird die Polyurethan-Dispersion auf Basis aliphatischer Polyisocyanate wie bei A2) beschrieben hergestellt. Es ist auch möglich als Komponente C) eine Mischung der genannten Dispersionen C1), C2) und C) einzusetzen.

Eine Dispersion wird dann als bei Raumtemperatur physikalisch trocknend bezeichnet, wenn nach dem Aufziehen eines Filmes die flüchtigen Komponenten verdunsten und ein klebfreier Film resultiert. Vorzugsweise werden dabei solche Dispersionen C) eingesetzt, die innerhalb von weniger als einer Stunde, besonders bevorzugt innerhalb von weniger als 30 Minuten bei Raumtemperatur physikalisch trocknen
Geeignete Polyacrylat-Emulsionen C2) sind solche wie unter A1) beschrieben

Polyurethan-Polyacrylat-Dispersionen C3) können erhalten werden, indem z.B. in Gegenwart einer Polyurethan-Dispersion eine radikalisch initiierte Emulsionspolymerisation von (Meth)acrylsäureestern, (Meth)acrylsäure, Hydroxyalkyl(meth)acrylate, Styrol und gegebenenfalls anderer Monomer durchgeführt wird. Dabei kann es zu Pfropfreaktionen auf das Polyurethan kommen. Es ist auch möglich z.B. durch Einbau von ungesättigten Verbindungen in das Polyurethan gezielt Pfropf- und auch Copolymerisationsreaktionen zwischen Polyurethan- und Polyacrylat durchzuführen. Es ist auch möglich das Polyurethan in Gegenwart von ungesättigten Monomeren wie z.B. Styrol, Butylacrylat und/oder Methylmethacrylat herzustellen und nach dem Dispergieren eine Polymerisation der Monomeren durchzuführen.

Besonders bevorzuge Polyurethan-Dispersionen C1) enthalten Umsetzungsprodukte aus:
1) 1,4 bis 6,5-Gew.-% Dimethylolpropionsäure, gegebenenfalls in Kombination mit einem Polyethylenoxidbaustein des Molekulargewichtsbereiches 750 bis 2500 g/mol,
2) 15 bis 35 Gew.-% Hexamethylendiisocyanat und/oder Isophorondiisocyanat und/oder Bis-(4-isocyanatocyclohexan)-methan und/oder 1-Methyl-2,4 (2,6)-diisocyanatocyclohexan,
3) 45 bis 80 Gew.% mindestens einer Polyolkomponente des Molekulargewichtsbereiches 840 bis 2400 auf Basis eines Polyesters und/oder Polycarbonates und/oder C₃-bzw. C₄-Ethers,
4) 0 bis 3 Gew.-% Hexandiol, Butandiol, Neopentylglykol, Glycerin und/oder Trimethylolpropan,
5) 0 bis 2,5 Gew.% Diamine und/oder Aminoalkohole und/oder Wasser als Kettenverlänger,
wobei Neutralisationsmittel für die in Mengen von 50 bis 125 Equivalenten bezogen auf die Mengen der Carboxyl- und Sulphonsäuregruppen und keine organischen Lösemittel enthalten sind.

Die erfindungsgemäßen Beschichtungsmittel enthalten
A) 15 bis 90 Gew.-%, bevorzugt 25 bis 85 Gew.-% einer wässrigen Bindemittelmischung,
B) 5 bis 40 Gew.-%, bevorzugt 9 bis 32 Gew. -% mindestens eines Vernetzers und
C) 5 bis 65 Gew.-%, bevorzugt 20 bis 55 Gew.-% einer oder mehrerer Dispersionen, ausgewählt aus der Gruppe bestehend aus Polyurethan-Dispersionen C1), Polyacrylat-Emulsionen C2) oder Polyurethan-Polyacrylat-Dispersionen C3),
   wobei sich die Prozentangaben zu A), B) und C) zu 100 Gew.-% ergänzen.

Ebenfalls eine Ausführungsform der vorliegenden Erfindung ist die erfindungsgemäßen wässrigen Beschichtungsmittel enthaltend
C) eine oder mehrere Dispersionen, ausgewählt aus der Gruppe bestehend aus Polyurethan-Dispersionen C1), Polyacrylat-Emulsionen C2) oder Polyurethan-Polyacrylat-Dispersionen C3) sowie
D) ein wasserverdünnbares, hydroxyfunktionelles Polyesterharz, wobei die Komponente C1) gleich A2) und C2) gleich A1) ist.

Eine weitere Ausführungsform der vorliegenden Erfindung ist die erfindungsgemäßen wässrigen Beschichtungsmittel enthaltend
D) ein wasserverdünnbares, hydroxyfunktionelles Polyesterharz.

Als Komponente D) geeignete wasserverdünnbare Polyester sind Anreibeharze, die über eine sehr gute Pigmentbenetzung bzw. Pigmentaffinität verfügen. Die Komponente D) weist Säurezahlen im Bereich von 25 bis 75 mg KOH/g Substanz und/oder Hydroxylgruppengehalte von 2,5 bis 10 Gew.-% und/oder Molekulargewichte im Bereich von 750 bis 5000 g/Mol und/oder Fettsäurebestandteile in Mengen von 15 bis 50 Gew.-% auf.

Bevorzugt als Anreibeharze D) sind wasserverdünnbare Polyester, hergestellt durch Umsetzung von
1) 30 bis 62 Gew.-% Diole, ausgewählt aus der Gruppe Hexandiol, Neopentylglykol, Diethylenglykol, Ethylenglykol, Propan-1,2-diol, Propan-1,3-diol und/oder 1-Butandiol, mit
2) 5 bis 20 Gew.-% Triole und/oder Tetraolen, ausgewählt aus der Gruppe Trimethylolpropan, Glycerin und/oder Pentaerythrit, mit
3) 30 bis 62 Gew.-% Dicarbonsäuren, ausgewählt aus der Gruppe Phthalsäureanhydrid, Isophthalsäure, Hexahydrophthalsäure, Tetrahydrophthalsäure und/oder Adipinsäure, anschließender Umsetzung des Polyesters mit
4) 3 bis 15 Gew.-% eines Anhydriden, bevorzugt Trimellithsäureanhydrid,
wobei sich die Prozentzahlen zu 100 Gew.-% ergänzen und die Säuregruppen teilweise oder ganz durch Umsetzung mit Neutralisationsaminen in die Salzform überführt werden.

Die erfindungsgemäßen Beschichtungsmittel enthalten
A) 15 bis 89,5 Gew.-%, bevorzugt 25 bis 85 Gew.-% einer wässrigen Bindemittelmischung,
B) 5 bis 40 Gew.-%, bevorzugt 10 bis 30 Gew.-% mindestens eines Vernetzers,
C) 5 bis 65 Gew.-%, bevorzugt 20 bis 50 Gew.-% einer oder mehrerer Dispersionen, ausgewählt aus der Gruppe bestehend aus Polyurethan-Dispersionen C1), Polyacrylat-Emulsionen C2) oder Polyurethan-Polyacrylat-Dispersionen C3) und
D) 0,5 bis 30 Gew.-%, bevorzugt 0,5 bis 15 Gew.-% eines wasserverdünnbaren, hydroxyfunktionellen Polyesterharzes,
wobei sich die Prozentangaben zu A), B), C) und D) zu 100 Gew.-% ergänzen.

Die erfindungsgemäßen Beschichtungsmittel können in einer weiteren Ausführungsform enthalten
A) 30 bis 94,5 Gew.-%, bevorzugt 55 bis 90 Gew.-% einer wässrigen Bindemittelmischung,
B) 5 bis 40 Gew.-%, bevorzugt 10 bis 30 Gew. -% mindestens eines Vernetzers und
D) 0,5 bis 30 Gew.-%, bevorzugt 0,5 bis 15 Gew. % eines wasserverdünnbaren, hydroxyfunktionellen Polyesterharzes,
wobei sich die Prozentangaben zu A), B)und D) zu 100 Gew.-% ergänzen.

Geeignete Polyester-Dispersionen bzw. -lösungen D) werden erhalten, indem hydroxyfunktionelle Polyester, hergestellt durch Umsetzung von mono-, di und/oder höherfunktionellen Alkoholen und Carbonsäuren bzw. deren Anhydriden unter Wasserabspaltung, mit Säureanhydriden wie z.B. Phthalsäureanhydrid, Hexahydrophthalsäureanhydrid, Tetrahydrophthalsäureanhydrid, Maleinsäureanhydrid, Trimellithsäureanhydrid, Pyromellithsäureanhydrid bei 60 bis 200°C, bevorzugt bei 120 bis 180°C derart umgesetzt werden, dass die Säureanhydride mit einem Teil der Hydroxylgruppen unter Ringöffnung des Anhydrids und Einbau in den Polyester umgesetzt werden. Dadurch werden hydroxy- und carboxyfunktionelle Polyester erhalten, die nach anteiliger oder vollständiger Neutralisation der Carboxylgruppen in Wasser dispergiert bzw. gelöst werden können. Die wässrigen Polyesterlösungen weisen mittlere Teilchengrößen von 10 bis 200, bevorzugt von 25 bis 100 nm auf.

Geeignete Rohstoffe zur Herstellung der hydroxyfunktionellen Polyester sind z.B. Diole wie Ethylenglykol, Butylenglykol, Diethylenglykol, Triethylenglykol, Polyalkylenglykole wie Polyethylenglykol, weiterhin Propandiol, Butandiol(1,4), Hexandiol(1,6), Neopentylglykol oder Hydroxypivalinsäureneopentylglykolester, wobei die drei letztgenannten Verbindungen bevorzugt sind. Als gegebenenfalls mit einzusetzende Polyole sind hier beispielsweise Trimethylolpropan, Glycerin, Erythrit, Pentaerythrit, Trimethylolbenzol oder Trishydroxyethylisocyanurat zu nennen. Als Di- bzw. Polycarbonsäuren kommen beispielsweise in Frage: Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, 2-Methylbernsteinsäure, 3,3-Diethylglutarsäure, 2,2-Dimethylbernsteinsäure, Trimellithsäure oder Pyromellithsäure. Anhydride dieser Säuren sind ebenfalls einsetzbar, soweit sie existieren. Für die Belange der vorliegenden Erfindung werden die Anhydride infolgedessen durch den Ausdruck "Säure" umfasst. Es können auch Monocarbonsäuren mit verwendet werden. Geeignete Monocarbonsäuren sind z.B. Kokosölfettsäure, Sojaölfettsäure, Safflorölfettsäure, Ricinusfettsäure, Ricinensäure, Erdnußölfettsäure, Tallölfettsäure oder Konjuenfettsäure, Benzoesäure, tert.-Butylbenzoesäure, Hexahydrobenzoesäure, 2-Ethylhexansäure, Isononansäure, Decansäure oder Octadecansäure.

Es kann auch ε-Caprolacton bei der Herstellung der Polyester mit verwendet werden.

Die hydroxyfunktionellen Polyester werden durch Polykondensation der genannten Rohstoffe, gegebenenfalls unter Einsatz geeigneter Veresterungskatalysatoren hergestellt und anschließend mit einem Säureanhydrid umgesetzt. Der so hergestellte Polyester wird in einem Lösemittel bzw. Lösemittelgemisch gelöst und mit Neutralisationsmittel versetzt.

Die Dispergierung bzw. Lösung in Wasser kann direkt nach Herstellung des Polyesters und Umsetzung mit dem Säureanhydrid oder aber später erfolgen.

Eine bevorzugte Polyesterzusammensetzung für eine Polyester-Dispersion bzw. -lösung D) ist aufgebaut aus
a) 30 bis 62, bevorzugt 30 bis 50 Gew.-% Diole, ausgewählt aus der Gruppe Hexandiol, Butandiol, Ethylenglykol, Diethylenglykol und/oder Neopentylglykol,
b) 5 bis 20, bevorzugt 6 bis 15 Gew.-% Triole und/oder Tetraole, bevorzugt Trimethylolpropan und/oder Gylycerin
c) 30 bis 62, bevorzugt 33 bis 58 Gew.-% Dicarbonsäuren bzw. deren Anhydride, ausgewählt aus der Gruppe Phthalsäureanhydrid, Isophthalsäure, Tetrahydrophthalsäure, Terephthalsäure und/oder Adipinsäure,
d) 0 bis 30, bevorzugt 0 bis 20 Gew.-% Monocarbonsäuren und/oder Caprolacton sowie
e) 3 bis 15, bevorzugt 5 bis 12 Gew.-% Säureanhydrid, ausgewählt aus der Gruppe Trimellithsäureanhydrid, Tetrahydrophthalsäureanhydrid und/oder Phthalsäureanhydrid.

Üblicherweise haben die Polyurethan-Dispersionen A2)/C1) per Gelchromatographie bestimmbare mittlere Molekulargewichte Mn von > 10 000 g/mol, bevorzugt > 30 000 g/Mol. Häufig sind in den Polyurethan-Dispersionen anteilig sehr hochmolekulare, nicht mehr vollständig in organischen Lösemitteln lösliche Anteile enthalten, die sich dann einer Molekulargewichtsbestimmung entziehen.

Üblicherweise haben die Polyester-Polyurethan-Dispersionen A3) z.B. per Gelchromatographie bestimmbare mittlere Molekulargewichte Mn von 1500 bis 8000 g/Mol.

Üblicherweise haben die Polyester-Dispersionen bzw. -lösungen D) z.B. per Gel-chromatographie ermittelbare mittlere Molekulargewichte Mn von 7500 bis 5000, bevorzugt von 1000 bis 3500 g/Mol.

Die erfindungsgemäßen Beschichtungsmittel sind zur Herstellung von anti chip Base Coats besonders gut geeignet. Sie können jedoch auch zur Herstellung beliebiger ein- oder mehrschichtig zu applizierenden, klaren, pigmentierten oder auch matten Lacken eingesetzt werden.

Die erfindungsgemäßen Beschichtungsmittel sind beispielsweise geeignet für die Automobillackierung oder für die Softfeel-Lackierung. Geeignete Substrate sind dabei Kunststoff, Holz, Metall, mineralischen Untergründen, Textilien, Leder und/oder Glas und Kombinationen daraus.

Die erfindungsgemäßen Beschichtungsmittel können auch zur Herstellung beliebiger ein- oder mehrschichtig zu applizierenden, klaren, pigmentierten oder auch matten Lacken für unterschiedlichste Anwendungen eingesetzt werden.

Gegenstand der vorliegenden Erfindung ist somit auch ein Lackaufbau, enthaltend ein Substrat und mindestens eine Schicht, bestehend aus den erfindungsgemäßen wässrigen Beschichtungsmitteln.

Die aus den erfindungsgemäßen Beschichtungsmitteln hergestellten Lacke und Beschichtungen können gegebenenfalls weitere Bindemittel, Reaktivverdünner und Polymere mit ungesättigten, durch UV Licht aushärtbare Gruppen, organische und/oder anorganische Pigmente, Ruße, Füllstoffe, weitere Lösemittel, Verdicker, Rheologieadditive, anorganische oder organische Nanopartikel z.B. auf Basis von Silizium, Zink, Titan, Barium, Calcium, Magnesium usw., Additive zur Verbesserung der Pigmentbenetzung, zur Entschäumung, zur Verbesserung des Verlaufs, des Glanzes oder der Haftung, zur Vermeidung bzw. Reduzierung der Vergilbung bzw. schädigender Einflüsse durch UV-Licht enthalten.

Die Applikation ist möglich durch Spritzen, Gießen, Tauchen, Walzen, Streichen, Rollen.

### Beispiele:

### Eingesetzte Komponenten:

### Rohstoff A1) Bayhydrol^{®} A 145:

Wässrige, hydroxyfunktionelle, sekundäre Polyacrylat-Dispersion. Festkörpergehalt 45%, Viskosität bei 23°C 1000 mPas, pH-Wert 8,0, Säurezahl 10 mg KOH/g Substanz, OH-Gehalt 1,5%, enthält je 4% Butylglykol und Solvent Naphta 100, Bayer MaterialScience AG, DE.

### Rohstoff A2) Bayhydrol^{®} XP 2621:

Wässrige, aliphatische, lösemittelfreie Polyurethan-Dispersion. Festkörpergehalt 40%, Viskosität bei 23°C 20 " (DIN 4 Becher, Auslaufzeit); pH-Wert 7,5, mittlere Teilchengröße (Laserkorrelationsspektroskopie) 100 nm, enthält Carboxylatgruppen, Bayer MaterialScience AG, DE.

### Rohstoff A3) Bayhydrol^{®} PT 241:

Wässrige, hydroxyfunktionelle Polyester-Polyurethan-Dispersion. Festkörpergehalt 41%, Viskosität 1000 mPas, Mn = 2300g/mol, pH-Wert 8,3, Säurezahl 7,5 mg KOH/g Substanz, OH-Gehalt 1%, enthält 5% N-Methylpyrrolidon, Bayer MaterialScience AG, DE.

### Dispersion A):

Mischung aus 50 Teilen Rohstoff A1), 15 Teilen Rohstoff A2) und 35 Teilen Rohstoff A3), jeweils bezogen auf Festkörpergehalte der einzelnen Rohstoffe. Festkörpergehalt 42,7%.

### Vernetzer B):

### Rohstoff B1) Cymel^{®} 328:

Methyliertes Melamin-Formaldehyd-Vernetzerharz, gelöst in Wasser, Cytec Industries Inc., USA.

### Rohstoff B2) Cymel^{®} 327:

Methyliertes Melamin-Formaldehyd-Vernetzerharz, gelöst in iso-Butanol, Cytec Industries Inc., USA.

### Rohstoff C) Bayhydrol^{®} XP 2621:

Wässrige, aliphatische, lösemittelfreie Polyurethan-Dispersion. Festkörpergehalt 40%, Viskosität bei 23°C 20 " (DIN 4 Becher, Auslaufzeit); pH-Wert 7,5, mittlere Teilchengröße (Laserkorrelationsspektroskopie) 100 nm, enthält Carboxylatgruppen, Bayer MaterialScience AG, DE.

### Rohstoff D) Bayhydrol^{®} D270:

Wasserverdünnbarer, hydroxyfunktioneller Polyester. Festkörpergehalt 70% in Wasser 11,5%, Butylglykol 13,3%, Dimethylethanolamin 5,2%. Viskosität bei 23°C 12000 mPas, pH-Wert 8,0, OH-Gehalt 2,0, Säurezahl 35 mg KOH/g Substanz, mittlere Teilchengröße 15 nm, Bayer MaterialScience AG, DE.

| | |
|---|---|
| BYK^{®}347: Deutschland | Polyethermodifiziertes Siloxan, Byk Chemie, Wesel, |
| Viscalex^{®}HV 30, 30%ige Lieferform: LTD, United Kingdom | (Verdicker auf Copolymerisatbasis, Allied Colloids |
| Disperbyk^{®}190: Chemie, Wesel, Deutschland | Pigmentstabilisierendes Blockcopolymer, Byk |
| Byk^{®} 011: | Entschäumer; Byk Chemie, Wesel, Deutschland |
| Gasruß FW 200 Ruß: | (Degussa AG, Frankfurt, Deutschland |
| Additol^{®}XL250: Specialities; USA | Additiv zur Pigmentbenetzung, Cytec Surface |
| Bayhytherm^{®}3146: | Blockierte Isocyanatgruppen enthaltende Polyurethandispersion Bayer MaterialScience AG, Leverkusen, Deutschland. |
| Maprenal^{®}MF 904 Melaminharz: | Ineos Melamins GmbH, Frankfurt, Deutschland |
| Marpenal^{®} MF^{®}915 Melaminharz, | Ineos Melamins GmbH, Frankfurt, Deutschland |
| Bayhytherm^{®} VP LS 2153: | Selbstvernetzende Polyurethandispersion, Bayer MaterialScience AG; Leverkusen, Deutschland |

### Beispiel 1): erfindungsgemäß

Herstellung und Prüfung einer erfindungsgemäßen "uni black anti chip Base Coat" Bindemittelkombination 1), deren Bindemittelanteil aus (jeweils bezogen auf Feststoffgehalt) 48,5% Dispersion A), 30% Rohstoff C), 20% Rohstoff B2) und 1,5% Rohstoff D) besteht.

37 Teile Dispersion A), 24 Teile Rohstoff C), 7 Teile Rohstoff B2), 4,7 Teile Butylglykol, 0,5 Teile BYK^{®}347, 0,9 Teile Viscalex^{®}HV 30, 12 Teile destilliertes Wasser und 3,3 Teile Dimethylethanolamin, 10%ig in Wasser, werden vorgelegt und mittels Dissolver mit Propellerrührer bei 2000 U/min vermischt, dann werden 10,5 Teile einer Pigmentpaste zugegeben und 30 Minuten bei 4000 U/min gerührt, wobei anschließend der pH-Wert auf 8,0 bis 8,5 eingestellt wird. Die Pigmentpaste enthält 4,5 Teile Rohstoff D), 14,8 Teile Dimethylethanolamin, 10%ig in Wasser, 30 Teile Disperbyk^{®}190, 0,9 Teile Byk^{®} 011, 17 Teile Gasruß FW 200 und 32 Teile Wasser, und wird hergestellt durch Dispergieren der Bestandteile im Dissolver und anschließendem Anreiben auf der Perlmühle für 30 Minuten.

Der so hergestellte wässrige uni-black anti chip Base Coat 1) hat einen pH-Wert von 8 bis 8,5 und wird mit einer Viskosität von 25 Sekunden (DIN 4 Becher-Auslaufzeit bei 23°C) auf mit zwei verschiedenen Füllern (Typ1 und Typ 2) beschichtete Bleche aufgetragen und 10 Minuten bei 80°C getrocknet, anschließend wird ein 2K Polyurethan-Decklack appliziert und bei 140°C für 30 Minuten ausgehärtet. Zum Vergleich wird ein uni Base Coat mit OEM Automobil Linienqualität mit geprüft.

**Tabelle 1: Uni-black anti chip Base Coat 1)**

| | | |
|---|---|---|
| | Uni black Base Coat, OEM automotive line quality | Uni black anti chip Base Coat (Beispiel 1) |
| auf Füller Typ 1 | | |
| Steinschlagfestigkeit (VDA-Test)* | 1,5 | 1,5 |
| Haftung des anti chip Base Coat auf Füller (1 = sehr gut, 2 = gut, 3 = schlecht) | 2 | 1-2 |
| Haupttrennebene bei Enthaftung** | Füller/KTL | Füller/KTL |
| DOI-Wert *** | 80 | 80-90 |
| auf Füller Typ 2 | | |
| Steinschlagfestigkeit (VDA-Test)* | 2 | 1,5 |
| Haftung des anti chip Base Coat auf Füller (1=sehr gut, 2 = gut, 3=schlecht) | 2 | 1-2 |
| Haupttrennebene bei Enthaftung** | Füller/KTL | Füller/KTL |
| DOI-Wert *** | 80 | 80-90 |

| | | |
|---|---|---|
| * Prüfung der Steinschlagfestigkeit von Beschichtungen: Teil 1: Multischlagprüfung nach DIN 55996-1: 1 = sehr gut, 5 = sehr schlecht ** Auftreten von Enthaftung bei starker Belastung: Der anti chip Base Coat haftet sehr gut auf den verschiedenen Füllertypen, Enthaftung tritt nur zwischen der Füller und KTL Schicht auf (= Haupttrennebene) *** Bei der Ermittlung des DOI-Wertes (distinction of image oder Abbildeschärfe) handelt es sich um eine den Decklackstand beschreibende Glanzmessung nahe am Reflexionswinkel, welche in der so genannten glow-box durchgeführt wird. Die ermittelten Werte sind Relativzahlen (0-100). Je höher der DOI-Wert, umso besser die Lackqualität und desto schärfer erscheint die Abbildung von kontrastreichen Objekten durch Spiegelung an der lackierten Oberfläche. Werte von 80 bzw. über 80 sind sehr gute Werte. | | |

Mit dem anti chip Base Coat 1) werden alle Anforderungen der Automobillackierung erfüllt. Die Qualität ist weitgehend unabhängig von der Art des Untergrundes bzw. des Füllers, die filmoptischen Eigenschaften und die Steinschlagschutzeigenschaften sind exzellent, die Haftung ist besser als bei der zum Vergleich geprüften Automobillinienqualität.

### Beispiel 2): erfindungsgemäß

Herstellung und Prüfung einer erfindungsgemäßen "uni schwarz anti chip Base Coat" Bindemittelkombination 2), deren Bindemittelanteil aus (jeweils bezogen auf Feststoffgehalt) 84% Dispersion A), 15% Rohstoff B2) und 1% Rohstoff D) besteht.

60,7 Teile Dispersion A), 7,2 Teile Vernetzer Rohstoff B2), 4,8 Teile Butylglykol, 0,5 Teile Byk^{®} 347, 1 Teil Viscalex^{®}HV30, 12 Teile destilliertes Wasser und 3 Teile 10%ige, wässrige Dimethylethanolamin-Lösung werden 10 Minuten im Dissolver bei 2000 U/min gerührt, dann werden 10,7 Teile einer Pigmentpaste, bestehend aus 4,6 Teilen Rohstoff D), 14,9 Teilen einer 10%-igen, wässrigen Lösung von Dimethylethanolamin, 30 Teile Disperbyk^{®}190, 17 Teilen Gasruß FW 200 und 32,42 Teilen destilliertes Wasser, zugegeben und ca. 30 Minuten mit 4000 U/min gerührt.

Der "uni black anti chip Base Coat" 2) hat eine Applikationsviskosität von 25 Sekunden (DIN 4 Auslaufbecher/23°C), einen pH-Wert von ca. 8 und einen Festkörpergehalt von 30,6%. Er wird auf ein mit einem Polyurethan-Füller beschichtetes Blech aufgetragen, 10 Minuten bei 80°C getrocknet, anschließend mit einem in der Automobilindustrie üblichen 2K-Polyurethan-Decklack überlackiert und bei 140°C für 30 Minuten ausgehärtet.

### Beispiel 3): erfindungsgemäß

Entspricht Beispiel 2), allerdings beträgt das Mengenverhältnis 69,5% Dispersion A), 29,5 % Rohstoff B2) und 1% Rohstoff D).

Der wässrige "uni-black anti chip Base Coat" 3) hat einen Feststoffgehalt von 32,5% und wird mit einer Viskosität von 25 Sekunden (DIN 4 Becher-Auslaufzeit bei 23°C) auf ein mit einem Polyurethan-Füller beschichtetes Blech aufgetragen und 10 Minuten bei 80°C getrocknet, anschließend wird ein 2K-Polyurethan-Decklack appliziert und bei 140°C für 30 Minuten ausgehärtet.

Folgende Prüfergebnisse wurden erhalten:

**Tabelle 2: Uni-black anti chip Base Coat 3).**

| | Uni black anti chip Base Coat | |
|---|---|---|
| | Beispiel 2 | Beispiel 3 |
| Applikationsviskosität | 25 s | 25 s |
| Festkörpergehalt | 30,6% | 32,5% |
| DOI-Wert (visuell) | 80-90 | 80-90 |
| Steinschlagfestigkeit (VDA-Test) | 1,5 | 1,5 |
| Haftung des anti chip Base coats auf Füller (1=sehr gut, 2 = gut, 3 = schlecht) | 1-2 | 1-2 |
| Haupttrennebene bei Enthaftung** | Füller/KTL | Füller/KTL |

### Beispiel 4): erfindungsgemäß

Herstellung eines erfindungsgemäßen "silbermetallic anti chip Base Coats" aus 49 Teilen Dispersion A), 29 Teilen Rohstoff C), 19 Teilen Rohstoff B1) und 2 Teilen Rohstoff D), jeweils bezogen auf Bindemittel fest.

17,5 Teile Dispersion A), 11,2 Teile Rohstoff C), 19 Teile destilliertes Wasser, 3,3 Teile Butylglykol, 4,5 Teile Dimethylethanolamin, 10%ig in Wasser, werden im Dissolver bei 2000 U/min für 10 Minuten gerührt, dann werden 2,8 Teile Viscalex^{®}HV30 und 19 Teile destilliertes Wasser zugegeben und erneut für 10 Minuten im Dissolver bei 2000 U/min gerührt, anschließend werden 3,5 Teile Rohstoff B1), 3,3 Teile Butylglykol und 4,2 Teile destilliertes Wasser zugegeben und für weitere 10 Minuten im Dissolver gerührt, dann werden 11,7 Teile einer Metallicpaste zugegeben und für 30 Minuten bei 4000 U/min gerührt. Anschließend wird der pH-Wert auf 8 bis 8,5 eingestellt.

Die Metallicpaste wird hergestellt durch Vermischen von 41,9 Teilen Butylglykol, 2,9 Teilen Rohstoff D), 4,3 Teilen Additol^{®}XL250, 50,6 Teilen Stapa Hydrolan^{®} 2156 Nr. 55900/G Aluminium und 0,23 Teilen Dimethylethanolamin in einem Dissolver für 30 Minuten bei 4000 U/min.

Der anti chip Base Coat 4) hat einen Festkörpergehalt von 18,7% und eine Applikationsviskosität von ca. 40 Sekunden (DIN 4 Auslaufbecher). Er wird auf mit KTL und Füller (Typ a) beschichteten Blech gespritzt, 10 Minuten bei 80°C getrocknet und dann mit einem 60-%igen 2K-PUR Klarlack auf Basis eines hydroxyfunktionellen Polyester-Polyacrylates und eines niedrigviskosen Polyisocyanates auf HDI-Basis überlackiert und für 30 Minuten bei 140°C ausgehärtet. Die Trockenschichtstärke des Basislackes ist ca. 15 µm, die des Klarlackes ca. 40 □m.

Der Füller Typ a) enthält als Bindemittelkomponenten einen wasserverdünnbaren, hydroxyfunktionellen Polyester (Bayhydrol^{®} D270), eine blockierte Isocyanatgruppen enthaltende Polyurethandispersion (Bayhytherm^{®}3146), sowie die Aminovernetzerharze Maprenal^{®}MF 904 und Marpenal^{®} MF915 im Verhältnis 30:55:7,5:7,5.

### Beispiel 5): erfindungsgemäß

Ein "Silver Metallic anti chip Base Coat" wird wie unter Beispiel 4) beschrieben hergestellt aus 29 Teilen Dispersion A), 49 Teilen Rohstoff C), 20 Teilen Rohstoff B1) und 2 Teilen Rohstoff D).

Der "anti chip Base Coat" 5) hat einen Festkörpergehalt von 15,9% und eine Applikationsviskosität von ca. 40 Sekunden (DIN 4 Auslaufbecher). Er wird auf mit KTL und Füller (Typ a) beschichteten Blech gespritzt, 10 Minuten bei 80°C getrocknet und dann mit einem 60-%igen 2K-PUR Klarlack auf Basis eines hydroxyfunktionellen Polyester-Polyacrylates und eines niedrigviskosen Polyisocyanates auf HDI-Basis überlackiert und für 30 Minuten bei 140°C ausgehärtet. Die Trockenschichtstärke des Basislackes ist ca. 15 µm, die des Klarlackes ca. 40 µm.

Folgende Prüfergebnisse wurden erhalten:

**Tabelle 3: Silver Metallic anti chip Base Coat**

| | **Silver Metallic anti chip Base Coat** (auf Füller Typ a) | |
|---|---|---|
| | Bsp 4 | Bsp 5 |
| Applikationsviskosität | 40 s | 40 s |
| Festkörpergehalt | 18,7% | 15,9% |
| Flip Flop Wert (X-rite) | | |
| Delta 25°/75° | 66,5 (107,8/52,1) | 68,3 (108/39,7) |
| Delta 15°/110° | 95,8 (129,5/33,7) | 103,8 (137,3/33,5) |
| **Prüfung im Lackaufbau:** | | |
| Steinschlagfestigkeit (VDA-Test*) | 1-1,5 | 1-1,5 |
| Haftung des anti chip Base Coats auf Füller (1=sehr gut, 2 = gut, 3 = schlecht) | 1-2 | 1-2 |
| Haupttrennebene bei Enthaftung** | Füller/KTL | Füller/KTL |

| | | |
|---|---|---|
| *1 = sehr gut, 5 = sehr schlecht ** Bei starker Beanspruchung tritt die Enthaftung zwischen Füller und KTL auf. Der anti chip Base Coat haftet sehr gut auf dem Füller, die Haupttrennebene für die Enthaftung ist die Füller/KTl-Ebene. | | |

Die Versuche 4) und 5) werden wiederholt, wobei ein anderer Füller (Typ b)auf Basis von Bayhydrol^{®}D270, Bayhytherm^{®} 3146, Bayhytherm^{®} VP LS 2153, Cymel^{®}327 im Verhältnis 20:32,5:32,5:15.

Folgende Prüfergebnisse werden erhalten:

**Tabelle 4: Silver Metallic anti chip Base Coat**

| | **Silver Metallic anti chip Base Coat** (auf Füller Typ b) | |
|---|---|---|
| | Beispiel 4 | Beispiel 5 |
| Applikationsviskosität | 40 s | 40 s |
| Festkörpergehalt | 18,7% | 15,9% |
| **Prüfung im Lackaufbau** | | |
| Steinschlagfestigkeit (VDA-Test*) | 1-1,5 | 1 |
| Haftung Base Coat auf Füller (1=sehr gut, 2 = gut, 3 = schlecht) | 1-2 | 1-2 |
| Haupttrennebene bei Enthaftung** | Füller/KTL | Füller/KTL |

| | | |
|---|---|---|
| *Skala von 0 bis 5; 1 = sehr gut, 5 = sehr schlecht ** Bei starker Beanspruchung tritt die Enthaftung zwischen Füller und KTL auf, der anti chip Base Coat Haftet sehr gut auf dem Füller | | |

Unabhängig von der Art des Untergrundes werden anti chip Base Coats erhalten, die sowohl ausgezeichnete filmoptische Werte bzw. Metallic-Effekte, als auch exzellente Steinschlagschutzbeständigkeit und Haftungswerte zeigen. Alle Beschichtungen zeigen sehr gute Beständigkeiten gegen Wasserbelastung und insgesamt eine ausgezeichnete Filmoptik. Die entsprechenden Lackformulierungen sind lagerstabil.

Die erfindungsgemäßen Bindemittelkombinationen sind zur Herstellung von anti chip Base Coats besonders gut geeignet und ermöglichen die Reduzierung des in der Automobillackierung häufig eingesetzten vierschichtigen Lackaufbaus, bestehend aus Grundierung, Steinschlagschutzfüller, Basislack und Decklack auf einen dreischichtigen Aufbau, bestehend aus Grundierung, anti chip Base Coat und Klarlack. Dies gibt die Möglichkeit die Kosten für die Lackierung deutlich zu reduzieren.

## Patentansprüche

1. Wässrige Beschichtungsmittel enthaltend eine wässrige Bindemittelmischung A) enthaltend
A1) 25 bis 70 Gew.-% einer sekundären, hydroxyfunktionellen Polyacrylatdispersion oder Polyacrylatemulsion,
A2) 5 bis 50 Gew.-% einer aliphatischen Polyurethandispersion,
A3) 20 bis 70 Gew.-% einer hydroxyfunktionellen Polyesterpolyurethandispersion aufgebaut zu mindestens 75 Gew.-% aus einem Polyester des Molekulargewichts 500 bis 2500 g/mol,
sowie mindestens einen Vernetzer B),
wobei mindestens eine Komponente A1) und/oder A3) in einer Menge von mindestens 35 Gew.-% enthalten sein muss.

2. Wässrige Beschichtungsmittel gemäß Anspruch 1, **dadurch gekennzeichnet, dass** diese einen Anteil an organischen Lösemitteln von 2 bis 12 Gew.-% aufweisen.

3. Wässrige Beschichtungsmittel gemäß Anspruch 1, **dadurch gekennzeichnet, dass** die Komponente B) Aminovernetzerharze sind.

4. Wässrige Beschichtungsmittel gemäß Anspruch 1, **dadurch gekennzeichnet, dass** die Komponente B) eine Kombination aus Aminovernetzerharzen und blockierten Polyisocyanaten ist.

5. Wässrige Beschichtungsmittel gemäß Anspruch 1, **dadurch gekennzeichnet, dass** diese
C) eine oder mehrere Dispersionen ausgewählt aus der Gruppe bestehend aus Polyurethan-Dispersionen C1), Polyacrylat-Emulsionen C2) oder Polyurethan-Polyacrylat-Dispersionen C3) enthalten, wobei die Komponente C1) gleich A2) und C2) gleich A1) ist.

6. Wässrige Beschichtungsmittel gemäß Anspruch 5, **dadurch gekennzeichnet, dass** diese
A) 15 bis 90 Gew.-% einer wässrigen Bindemittelmischung,
B) 5 bis 40 Gew.-% mindestens eines Vernetzers und
C) 5 bis 65 Gew.-% einer oder mehrerer Dispersionen, ausgewählt aus der Gruppe bestehend aus Polyurethan-Dispersionen C1), Polyacrylat-Emulsionen C2) oder Polyurethan-Polyacrylat-Dispersionen C3) enthalten,
wobei sich die Prozentangaben zu A), B) und C) zu 100 Gew.-% ergänzen.

7. Wässrige Beschichtungsmittel gemäß Anspruch 1, **dadurch gekennzeichnet, dass** diese
C) eine oder mehrere Dispersionen ausgewählt aus der Gruppe bestehend aus Polyurethan-Dispersionen C1), Polyacrylat-Emulsionen C2) oder Polyurethan-Polyacrylat-Dispersionen C3) sowie
D) ein wasserverdünnbares, hydroxyfunktionelles Polyesterharz enthält, wobei die Komponente C1) gleich A 2) und C2) gleich A1) ist.

8. Wässrige Beschichtungsmittel gemäß Anspruch 7, **dadurch gekennzeichnet, dass** diese
A) 15 bis 89,5 Gew.-% einer wässrigen Bindemittelmischung,
B) 5 bis 40 Gew.-% mindestens eines Vernetzers,
C) 5 bis 65 Gew.-% einer oder mehrerer Dispersionen, ausgewählt aus der Gruppe bestehend aus Polyurethan-Dispersionen C1), Polyacrylat-Emulsionen C2) oder Polyurethan-Polyacrylat-Dispersionen C3) und
D) 0,5 bis 30 Gew.-% eines wasserverdünnbaren, hydroxyfunktionellen Polyesterharzes enthalten,
wobei sich die Prozentangaben zu A), B), C) und D) zu 100 Gew.-% ergänzen.

9. Wässrige Beschichtungsmittel gemäß Anspruch 5, 6, 7, 8, **dadurch gekennzeichnet, dass** die Komponente C) eine physikalisch trocknende Dispersion ist.

10. Wässrige Beschichtungsmittel gemäß Anspruch 1, **dadurch gekennzeichnet, dass** diese
D) ein wasserverdünnbares, hydroxyfunktionelles Polyesterharz enthält.

11. Wässrige Beschichtungsmittel gemäß Anspruch 10, **dadurch gekennzeichnet, dass** diese
A) 30 bis 94,5 Gew.-% einer wässrigen Bindemittelmischung,
B) 5 bis 40 Gew.-% mindestens eines Vernetzers und
D) 0,5 bis 30 Gew.-% eines wasserverdünnbaren, hydroxyfunktionellen Polyesterharzes enthalten,
wobei sich die Prozentangaben zu A), B) und D) zu 100 Gew.-% ergänzen.

12. Wässrige Beschichtungsmittel gemäß Anspruch 7, 8, 10, 11, **dadurch gekennzeichnet, dass** die Komponente D) Säurezahlen im Bereich von 25 bis 75 mg KOH/g Substanz und/oder Hydroxylgruppengehalte von 2,5 bis 10 Gew.-% und/oder Molekulargewichte im Bereich von 750 bis 5000 g/Mol und/oder Fettsäurebestandteile in Mengen von 15 bis 50 Gew.-% aufweist.

13. Verwendung der wässrigen Beschichtungsmittel gemäß Anspruch 1 zur Herstellung von anti chip Base Coats.

14. Lackaufbau, enthaltend ein Substrat und mindestens eine Schicht, bestehend aus wässrigen Beschichtungsmitteln gemäß Anspruch 1.

15. Lackaufbau gemäß Anspruch 14, **dadurch gekennzeichnet, dass** die Substrate ausgewählt sind aus der Gruppe der Kunststoffe, Holz, Metall, mineralischen Untergründe, Textilien, Leder und/oder Glas und Kombinationen daraus.

## Claims

1. Aqueous coating compositions containing an aqueous binder mixture A) containing
A1) 25 to 70 wt.% of a secondary, hydroxy-functional polyacrylate dispersion or polyacrylate emulsion,
A2) 5 to 50 wt.% of an aliphatic polyurethane dispersion,
A3) 20 to 70 wt.% of a hydroxy-functional polyester-polyurethane dispersion composed to an extent of at least 75 wt.% of a polyester of a molecular weight of 500 to 2500 g/mol,
and at least one crosslinking agent B),
wherein at least one component A1) and/or A3) must be present in a quantity of at least 35 wt.%.

2. Aqueous coating compositions according to claim 1, **characterised in that** they comprise an organic solvent fraction of 2 to 12 wt.%.

3. Aqueous coating compositions according to claim 1, **characterised in that** component B) are amino crosslinking resins.

4. Aqueous coating compositions according to claim 1, **characterised in that** component B) is a combination of amino crosslinking resins and blocked polyisocyanates.

5. Aqueous coating compositions according to claim 1, **characterised in that** they contain
C) one or more dispersions selected from the group consisting of polyurethane dispersions C1), polyacrylate emulsions C2) or polyurethane-polyacrylate dispersions C3), wherein component C1) is identical to A2) and C2) identical to A1).

6. Aqueous coating compositions according to claim 5, **characterised in that** they contain
A) 15 to 90 wt.% of an aqueous binder mixture,
B) 5 to 40 wt.% of at least one crosslinking agent and
C) 5 to 65 wt.% of one or more dispersions, selected from the group consisting of polyurethane dispersions C1), polyacrylate emulsions C2) or polyurethane-polyacrylate dispersions C3),
wherein the percentages of A), B) and C) add up to 100 wt.%.

7. Aqueous coating compositions according to claim 1, **characterised in that** they contain
C) one or more dispersions selected from the group consisting of polyurethane dispersions C1), polyacrylate emulsions C2) or polyurethane-polyacrylate dispersions C3) and
D) a water-dilutable, hydroxy-functional polyester resin, wherein component C1) is identical to A2) and C2) identical to A1).

8. Aqueous coating compositions according to claim 7, **characterised in that** they contain
A) 15 to 89.5 wt.% of an aqueous binder mixture,
B) 5 to 40 wt.% of at least one crosslinking agent,
C) 5 to 65 wt.% of one or more dispersions, selected from the group consisting of polyurethane dispersions C1), polyacrylate emulsions C2) or polyurethane-polyacrylate dispersions C3) and
D) 0.5 to 30 wt.% of a water-dilutable, hydroxy-functional polyester resin,
wherein the percentages of A), B), C) and D) add up to 100 wt.%.

9. Aqueous coating compositions according to claims 5, 6, 7, 8, **characterised in that** component C) is a physically drying dispersion.

10. Aqueous coating compositions according to claim 1, **characterised in that** they contain
D) a water-dilutable, hydroxy-functional polyester resin.

11. Aqueous coating compositions according to claim 10, **characterised in that** they contain
A) 30 to 94.5 wt.% of an aqueous binder mixture,
B) 5 to 40 wt.% of at least one crosslinking agent and
D) 0.5 to 30 wt.% of a water-dilutable, hydroxy-functional polyester resin,
wherein the percentages of A), B) and D) add up to 100 wt.%.

12. Aqueous coating compositions according to claims 7, 8, 10, 11, **characterised in that** component D) comprises acid values in the range from 25 to 75 mg of KOH/g of substance and/or hydroxyl group contents of 2.5 to 10 wt.% and/or molecular weights in the range from 750 to 5000 g/mol and/or fatty acid constituents in quantities of 15 to 50 wt.%.

13. Use of aqueous coating compositions according to claim 1 for producing anti-chip base coats.

14. A coating structure containing a substrate and at least one layer consisting of aqueous coating compositions according to claim 1.

15. A coating structure according to claim 14, **characterised in that** the substrates are selected from the group of plastics, wood, metal, mineral substrates, textiles, leather and/or glass and combinations thereof.

## Revendications

1. Revêtement aqueux contenant un mélange de liant(s) aqueux A), comprenant
A1) 25 à 70% en poids d'une dispersion de polyacrylate ou d'une émulsion de polyacrylate à fonction hydroxyle, secondaire,
A2) 5 à 50% en poids d'une dispersion de polyuréthanne aliphatique,
A3) 20 à 70% en poids d'une dispersion de polyester-polyuréthanne à fonction hydroxyle, élaboré à partir d'au moins 75% en poids d'un polyester de poids moléculaire allant de 500 à 2500 g/mole,
ainsi qu'au moins un agent de réticulation B),
où au moins un composant A1) et/ou A3) doit être présent en une quantité d'au moins 35% en poids.

2. Revêtement aqueux selon la revendication 1, **caractérisé en ce que** celui-ci présente un solvant organique en une proportion allant de 2 à 12% en poids.

3. Revêtement aqueux selon la revendication 1, **caractérisé en ce que** le composant B) est une ou plusieurs résines de réticulation amino.

4. Revêtement aqueux selon la revendication 1, **caractérisé en ce que** le composant B) est une combinaison de résines de réticulation amino et de polyisocyanates bloqués.

5. Revêtement aqueux selon la revendication 1, **caractérisé en ce que** celui-ci contient
C) une ou plusieurs dispersions choisies dans le groupe consistant en des dispersions de polyuréthanne C1), des émulsions de polyacrylate C2) ou des dispersions de polyuréthanne-polyacrylate C3), où le composant C1) est similaire à A2) et C2) est similaire à A1).

6. Revêtement aqueux selon la revendication 5, **caractérisé en ce que** celui-ci contient
A) 15 à 90% en poids d'un mélange aqueux (de) liant(s),
B) 5 à 40% en poids d'au moins un agent de réticulation, et
C) 5 à 65% en poids d'une ou de plusieurs dispersions, choisies parmi le groupe consistant en des dispersions de polyuréthanne C1), des émulsions de polyacrylate C2) ou des dispersions de polyuréthanne-polyacrylate C3),
où les données en pourcentage de A), B) et C) s'additionnent à 100%.

7. Revêtement aqueux selon la revendication 1, **caractérisé en ce que** celui-ci contient
C) une ou de plusieurs dispersions, choisies parmi le groupe consistant en des dispersions de polyuréthanne C1), des émulsions de polyacrylate C2) ou des dispersions de polyuréthanne-polyacrylate C3),
ainsi que
D) une résine polyester à fonction hydroxyle, diluable dans l'eau, où le composant C1) est similaire à A2) et C2) est similaire à A1).

8. Revêtement aqueux selon la revendication 7, **caractérisé en ce que** celui-ci contient
A) 15 à 89,5% en poids d'un mélange aqueux (de) liant(s),
B) 5 à 40% en poids d'au moins un agent de réticulation,
C) 5 à 65% en poids d'une ou de plusieurs dispersions, choisies parmi le groupe consistant en des dispersions de polyuréthanne C1), des émulsions de polyacrylate C2) ou des dispersions de polyuréthanne-polyacrylate C3), et
D) 0,5 à 30% en poids d'une résine de polyester à fonction hydroxyle, diluable dans l'eau,
où les données en pourcentage de A), B), C) et D) s'additionnent à 100%.

9. Revêtement aqueux selon les revendications 5, 6, 7, 8, **caractérisé en ce que** le composant C) est une dispersion à séchage physique.

10. Revêtement aqueux selon la revendication 1, **caractérisé en ce que** celui-ci contient
D) une résine de polyester à fonction hydroxyle, diluable dans l'eau.

11. Revêtement aqueux selon la revendication 10, **caractérisé en ce que** celui-ci contient
A) 30 à 94,5% en poids d'un mélange aqueux (de) liant(s),
B) 5 à 40% en poids d'au moins un agent de réticulation, et
D) 0,5 à 30% en poids d'une résine de polyester à fonction hydroxyle, diluable dans l'eau,
où les données en pourcentage de A), B) et D) s'additionnent à 100%.

12. Revêtement aqueux selon les revendications 7, 8, 10, 11 **caractérisé en ce que** le composant D) présente un indice d'acide situé dans l'intervalle allant de 25 à 75 mg de KOH/g de substance et/ou une teneur en radicaux hydroxyle allant de 2,5 à 10% en poids et/ou un poids moléculaire situé dans l'intervalle allant de 750 à 5000 g/mole et/ou des constituants acide gras en la quantité allant de 15 à 50% en poids.

13. Utilisation du revêtement aqueux selon la revendication 1, pour la préparation de "anti-chip Base Coats" (peintures résistantes au choc).

14. Structure de laque, contenant un substrat et au moins une couche consistant en le revêtement aqueux selon la revendication 1.

15. Structure de couche selon la revendication 14, **caractérisée en ce que** les substrats sont choisis parmi le groupe des matières plastiques, du bois, du métal, des substrats minéraux, des textiles, du cuir et/ou du verre et de leurs combinaisons.
